# EUROPÄISCHE PATENTSCHRIFT

(11) **EP 0 297 326 B1**
(45) Veröffentlichungstag und Bekanntmachung des Hinweises auf die Patenterteilung: **01.09.1993**
(21) Anmeldenummer: 88109216.7
(22) Anmeldetag: 09.06.1988
(51) Int. Cl.: H04M 3/00, H04Q 11/04, H04B 1/58

(54) **Schaltungsanordnung für einen Baustein im Anschlussbereich eines digitalen Zeitmultiplex-Fernmeldenetzes**
Circuitry for a connection component in a time division multiplex digital telecommunications network
Circuit pour un composant de raccordement à un réseau numérique de télécommunications à multiplexage temporel

(30) Priorität: 03.07.1987 DE 3722121
(43) Veröffentlichungstag der Anmeldung: 04.01.1989
(73) Patentinhaber: SIEMENS AKTIENGESELLSCHAFT, 80333 München (DE)
(72) Erfinder: Lechner, Robert, Dipl.-Ing., A-3100 Sankt Pölten (AT); Drescher, Manfred, Dipl.-Ing., D-8080 Fürstenfeldbruck (DE)

(56) Entgegenhaltungen:
- DE-A- 2 300 612
- DE-A- 3 215 680
- US-A- 3 753 140
- US-A- 4 524 337
- US-A- 4 582 963
- Telcom Report, Band 8, Heft 2, April/März 1985, Seiten 102-107, Berlin, DE; Borger et al "Integrierte Teilnehmerschaltung (SLIC) für digitale Vermittlungen"

## Beschreibung

Die Erfindung betrifft eine Schaltungsanordnung für einen die Funktionen der Analog-Digital-Wandlung, der Digital-Analog-Wandlung, der Filterung und des Zweidraht-Vierdraht-Übergangs, letzteres mit Hilfe eines digitalen Transversalfilters, realisierenden Baustein, der mittels eines Übertragers an die Adern einer Teilnehmeranschlußleitung eines digitalen Zeitmultiplex-Fernmeldenetzes angekoppelt ist.

Bausteine der erwähnten Art, für die auch Bezeichnungen wie COSLAC und SICOFI gebraucht werden, sind in der Praxis so ausgestaltet, daß die durch sie realisierten Funktionen programmierbar sind, also durch Software-Befehle den jeweiligen Gegebenheiten angepaßt werden können, womit sie universell einsetzbar sind.

Mit dem erwähnten Übertrager kann eine erdsymmetrische Ankopplung an die a- und b-Adern eine Teilnehmeranschlußleitung an den erdunsymmetrischen analogen Eingang und Ausgang des Bausteins vorgenommen werden. Ferner erfolgt über diesen Übertrager eine Fernspeisung der an die Teilnehmeranschlußleitung angeschlossenen analogen Teilnehmereinrichtungen.

Die Analogsignale, die vom Analogsignalausgang eines solchen Bausteins an den Übertrager gelangen, werden zu einem Teil reflektiert und gelangen zurück an den Analogsignaleingang des Bausteins. Sie erfahren dabei auch eine nichtlineare Verzerrung ihrer Gruppenlaufzeit, d. h. die verschiedenfrequenten Signalanteile werden in unterschiedlichem Maße eine Phasenverschiebung, unterworfen, die um so größer ist, je kleiner der Wert der Hauptinduktivität des Übertragers ist. Betroffen sind dabei insbesondere Frequenzen im unteren Bereich des Sprachübertragungsbandes. Die Kompensation der genannten reflektierten Signalanteile, die bei der erwähnten Realisierung des Zweidraht-Vierdraht-Übergangs zu erfolgen hat, d. h. die Gabelübergangsdämpfung, wird um so unvollständiger bzw. geringer, je größer die Verzerrung der Gruppenlaufzeit ist. Im Interesse einer guten Gabelübergangsdämpfung müßte also ein Übertrager mit möglichst großer Hauptinduktivität verwendet werden, was aber der allgemeinen Forderung nach möglichst kleiner Übertragerbauform zuwider läuft.

Die Aufgabe der Erfindung besteht also darin, eine Schaltungsanordnung anzugeben, die die Verwendung von kleinen Übertragerbauformen bei gleichzeitig ausreichend guter Gabelübergangsdämpfung gestattet.

Diese Aufgabe wird mit einer Schaltungsanordnung der im Oberbegriff angegebenen Art gelöst, die erfindungsgemäß dadurch gekennzeichnet ist, daß sie zwischen dem Ausgang des Bausteins und dem Übertrager angeordnet ist und eine Verzerrung der Gruppenlaufzeit, der über sie an den Übertrager gelangenden Signale in einer Weise bewirkt, die entgegengesetzt gleich der Verzerrung der Gruppenlaufzeit ist, die diese Signale bei ihrer teilweisen Reflektion am Übertrager zurück zum Eingang des Bausteins erfahren.

Da mit der erfindungsgemäßen Schaltungsanordnung eine Kompensation der Laufzeitverzerrungen bewirkt wird, die bei der Reflexion der vom Baustein an den Übertrager gelangenden Signale entstehen, kann der Übertrager im Hinblick auf die Güte der Gabelübergangsdämpfung so klein gemacht werden, wie dies die sonstigen Gegebenheiten gestatten.

Gemäß einer weiteren Ausgestaltung der Erfindung besteht die erwähnte Schaltungsanordnung aus einem als nichtinvertierender Verstärker betriebenen Operationsverstärker, dessen nichtinvertierender Eingang mit dem Ausgang des Bausteins verbunden ist, dessen Verstärkerausgang an eine Wicklung des Übertragers angeschlossen ist und an dessen Verstärkerausgang und dessen invertierenden Eingang ein Rückkopplungsnetzwerk angeschlossen ist, dessen Charakteristik zusammen mit der den genannten Verstärkerbetrieb besitimmenden Beschaltung des invertierenden Eingangs die gewünschte Laufzeitverzerrung bewirkt.

Gemäß noch einer anderen Ausgestaltung der Erfindung besteht das Rückkopplungsnetzwerk aus einem an den Ausgang des Operationsverstärkers und an dessen invertierenden Eingang angeschlossenen seriellen RC-Glied, das zusammen mit einem den Ausgang und den invertierenden Eingang verbindenden ersten Ohmschen Widerstand und einem den invertierenden Eingang mit einem Bezugspotential führenden Schaltungspunkt verbindenden zweiten Ohmschen Widerstand die gewünschte Laufzeitverzerrung bewirkt.

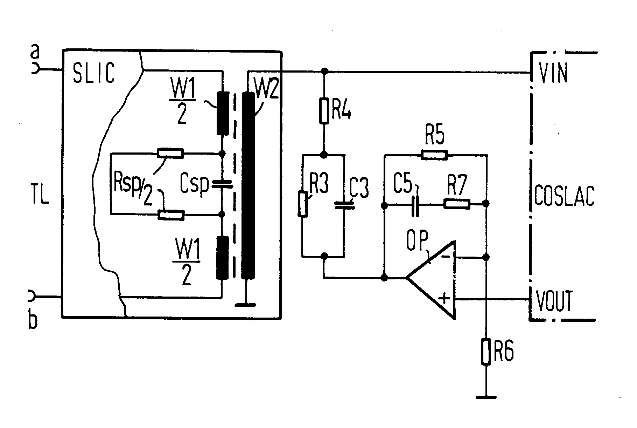

Nachstehend wird die Erfindung anhand eines Ausführungsbeispiels unter Bezugnahme auf die Zeichnung näher erläutert.

Die Zeichnung zeigt auf ihrer linken Seite einen Schnittstellenbaustein SLIC, der die Schnittstelle zu den Adern a und b einer Teilnehmernanschlußleitung TL eines digitalen Zeitmultiplex-Fernmeldenetzes darstellt und der u. a. Widerstände Rsp/2 und einen Kondensator Csp einer Speisebrücke sowie einen Übertrager Ü mit Wicklungen W1/2 und W2 enthält.

Auf der rechten Seite der Figur ist eine Baueinheit COSLAC angedeutet, die hier nicht dargestellte Bestandteile enthält, mit deren Hilfe u. a. eine Analog-Digital-Wandlung der von der Teilnehmeranschlußleitung über den Übertrager Ü an ihren Analogsignal-Eingang VIN und eine Digital-Analog-Wandlung der vom Koppelfeld fer Vermittlungsstelle eines digitalen Zeitmultiplex-Fernmeldenetzes kommenden Digitalsignale, die dann als Analogsignale am Ausgang VOUT auftreten, bewirkt wird. Innerhalb der Baueinheit COSLAC werden ferner Filterfunktionen sowie der Zweidraht-Vierdrahtübergang von der zweidrähtigen Teilnehmeranschlußleitung zum vierdrähtigen Signalweg durch die Vermittlungsstelle realisiert. Hierzu ist ein digitales Transversalfilter verwendet.

Die Figur zeigt ferner einen Operationsverstärker OP, dessen nichtinvertierender Eingang mit dem erwähnten Analogsignalausgang VOUT des Bausteins COSLAC verbunden sind und dessen Ausgang über die Parallelschaltung eines Widerstands R3 und eines Kondensators C3 und einen hierzu in Reihe liegenden Widerstand R4 an den Übertrager Ü angeschlossen sind.

Der Ausgang des Operationsverstärkers OP ist ferner über einen Widerstand R5 mit dem invertierenden Eingang des Operationsverstärkers verbunden. Dieser invertierende Eingang liegt über einen Widerstand R6 an einem Bezugspotential führenden Schaltungspunkt. Insoweit stellt der Operationsverstärker einen nichtinvertierenden Verstärker dar, der als Treiberverstärker für die vom Baustein COSLAC an den Übertrager Ü gelieferten Analogsignale dient. Der mit der einen Übertragerwicklung verbundene Anschluß des Widerstands R4 ist auch mit dem Analogsignaleingang VIN des Bausteins COSLAC verbunden. Die heirdurch gebildete Schleife zwischen dem Analogsignalausgang VOUT und dem Analogsignaleingang VIN, in der die Elemente R3, R4 und C3 einen Bezugswiderstand bilden, ist zusammen mit einem ebenfalls Bestandteil der Baueinheit COSLAC bildenden programmierbaren Filter von Bedeutung, das die Eingangsimpedanz des Bausteins bestimmt.

Wie schon dargelegt, werden die Analogsignale, die über den Ausgang VOUT der Baueinheit COSLAC abgegeben werden, und die an sich möglichst vollständig auf die Zweidrahtleitung TL gelangen sollen, teilweise am Übertrager Ü reflektiert und gelangen wieder an den Analogsignaleingang VIN der Baueinheit. Das dort enthaltene digitale Transversalfilter sorgt dafür, daß diese reflektierte Signalanteile weitgehend kompensiert werden, und damit nicht auf den abgehenden Teil des Vierdrahtsignalwegs, also zum Koppelfeld der Vermittlungsstelle hin gelangen. Die der ebenfalls erwähnte Laufzeitverzerrungen, die die reflektierten Signale erfahren und die um so größer sind, je kleiner die Hauptinduktivität des Übertragers Ü ist, verschlechtern die Vollständigkeit einer solchen Kompensation und damit die Gabelübergangsdämpfung.

Der Ausgang des Operationsverstärkers OP und der invertierende Eingang desselben sind nun außerdem durch die Reihenschaltung eines Kondensators C5 und eines Widerstandes R7 miteinander verbunden. Diese letztgenannten Schaltelemente sind zusammen mit den erwähnten Widerständen R5 und R6 so dimensioniert, daß die vom Analogsignalausgang VOUT der Baueinheit COSLAC über den Operationsverstärker an den Übertrager Ü gelangenden Analogsignale eine Laufzeitverzerrung erfahren, die derjenigen entgegengesetzt ist, die bei der Reflektion der Analogsignale am Übertrager Ü zustande kommt. Es erfolgt aufgrund der erfindungsgemäßen Schaltungsanordnung also eine Kompensation der Laufzeitverzerrungen, so daß bei der Dimensionierung des Übertragers Ü keine Rücksicht auf solche Laufzeitverzerrungen genommen werden muß, der Übertrager also eine so geringe Hauptinduktivität und damit auch kleine Bauform haben kann, wie es die sonstigen Gegebenheiten zulassen.

## Patentansprüche

1. Schaltungsanordnung für einen die Funktionen der Analog-Digital-Wandlung, der Digital-Analog-Wandlung, der Filterung und des Zweidraht-Vierdrahtübergangs, letzteres mit Hilfe eines digitalen Transversalfilters, realisierenden Baustein (COSLAC), der mittels eines Übertragers (Ü) an die Adern (a, b) einer Teilnehmeranschlußleitung (TL) eines digitalen Zeitmultiplex-Fernmeldenetzes angekoppelt ist,
**dadurch gekennzeichnet**,
daß sie zwischen dem Ausgang (VOUT) des Bausteins (COSLAC) und dem Übertrager (Ü) angeordnet ist, und eine Verzerrung der Gruppenlaufzeit der über sie an den Übertrager (Ü) gelangenden Signale in einer Weise bewirkt, die der Verzerrung der Gruppenlaufzeit entgegengesetzt gleich ist, die diese Signale in ihrer teilweisen Reflektion am Übertrager (Ü) zurück zum Eingang (VIN) des Bausteins (COSLAC) erfahren.

2. Schaltungsanordnung nach Anspruch 1,
**dadurch gekennzeichnet**,
daß sie durch einen als nichtinvertierender Verstärker betriebenen Operationsverstärker (OP) gebildet wird, dessen nichtinvertierender Eingang (+) mit dem Ausgang (VOUT) des Bausteins (COSLAC) verbunden ist, dessen Verstärkerausgang an die eine Wicklung (W2) des Übertragers (Ü) angeschlossen ist und an dessen Verstärkerausgang und dessen invertierendem Eingang (-) ein Rückkopplungsnetzwerk (C5, R7) angeschlossen ist, dessen Charakteristik zusammen mit der den genannten Verstärkerbetrieb bestimmenden Beschaltung (R5, R6) des invertierenden Eingangs (-) die gewünschte Laufzeitverzerrung bewirkt.

3. Schaltungsanordnung nach Anspruch 2,
**dadurch gekennzeichnet**,
daß das Rückkopplungsnetzwerk aus einem an den Ausgang des Operationsverstärkers (OP) und dessen invertierenden Eingang (-) angeschlossenem Eingang angeschlossenes serielles RC-Glied (C5, R7) ist, das zusammen mit einem den Ausgang des Operationsverstärkers (OP) und dessen invertierenden Eingang (-) verbindenden ersten Ohmschen Widerstand (R5) und einem diesen invertierenden Eingang (-) mit einem Bezugspotential führenden Schaltungspunkt verbindenden zweiten Ohmschen Widerstand (R6) die gewünschte Laufzeitverzerrung bewirkt.

## Claims

1. Circuit arrangement for a component (COSLAC) realising the functions of analog-digital conversion, digital-analog conversion, filtering and the transition from two-wire to four-wire, the latter with the aid of a digital transversal filter, which component is coupled by means of a transformer (Ü) to the wires (a, b) of a subscriber line (TL) of a digital time-division multiplex telecommunications network, characterised in that it is arranged between the output (VOUT) of the component (COSLAC) and the transformer (Ü), and causes a distortion of the group delay of the signals reaching the transformer (Ü) via it in a manner that is equal and opposite to the distortion of the group delay that said signals experience in their partial reflection at the transformer (Ü) back to the input (VIN) of the component (COSLAC).

2. Circuit arrangement according to Claim 1, characterised in that it is formed by an operational amplifier (OP) operated as a non-inverting amplifier, the non-inverting input (+) of which is connected to the output (VOUT) of the component (COSLAC), the amplifier output of which is connected to one winding (W2) of the transformer (Ü), and to the amplifier output of which and the inverting input (-) of which a feedback network (C5, R7) is connected, the characteristic of which, together with the wiring (R5, R6) of the inverting input (-) determining said amplifier operation, causes the desired delay distortion.

3. Circuit arrangement according to Claim 2, characterised in that the feedback network comprising an input connected to the output of the operational amplifier (OP) and its inverting input (-) is connected serial RC element (C5, R7) [sic], which, together with a first ohmic resistor (R5) connecting the output of the operational amplifier (OP) and its inverting input (-) and a second ohmic resistor (R6) connecting said inverting input (-) to a circuit point carrying reference potential, causes the desired delay distortion.

## Revendications

1. Circuit pour un module (COSLAC) qui réalise les fonctions de conversion analogique/numérique, de conversion numérique/analogique, de filtrage et de jonction deux fils - quatre fils, cette dernière au moyen d'un filtre transversal numérique, et qui est couplé, au moyen d'un transformateur d'adaptation (Ü), aux fils (a,b) d'une ligne d'abonné (TL) d'un réseau de télécommunication numérique à multiplexage temporel, caractérisé par le fait
que le circuit est disposé entre la sortie (VOUT) du module (COSLAC) et le transformateur d'adaptation (Ü), et crée une distorsion du temps de propagation de groupe des signaux parvenant, par son intermédiaire, au transformateur d'adaptation (Ü) de sorte que la distorsion du temps de propagation de groupe est égale et de sens opposé à celle que ces signaux subissent lors de leur réflexion partielle dans le transformateur (Ü), réflexion qui les renvoie à l'entrée (VIN) du module (COSLAC).

2. Circuit suivant la revendication 1, caractérisé par le fait qu'il est formé d'un amplificateur opérationnel (OP) qui fonctionne comme amplificateur non inverseur, dont l'entrée non inverseuse (+) est reliée à la sortie (VOUT) du module (COSLAC), dont la sortie est reliée à l'un des enroulements (W2) du transformateur d'adaptation (Ü) et à l'entrée inverseuse (-) duquel est relié un réseau de contre-réaction (C5, R7) dont la caractéristique crée, conjointement avec l'interconnexion (R5, R6) de l'entrée inverseuse (-), determinant ledit fonctionnement amplificateur, la distorsion souhaitée du temps de propagation.

3. Circuit suivant la revendication 2, caractérisé par le fait que le réseau de contre-réaction est constitué d'un circuit série RC (C5,R7), qui est relié à la sortie de l'amplificateur opérationnel (OP) et à l'entrée reliée à l'entrée inverseuse (-) de ce dernier et qui crée, conjointement avec une première résistance ohmique (R5) reliant la sortie de l'amplificateur opérationnel (OP) et l'entrée inverseuse (-) de cet amplificateur et avec une seconde résistance ohmique (R6) reliant cette entrée inverseuse (-) à un point du circuit placé au potentiel de référence, la distorsion souhaitée du temps de propagation.
